# EUROPEAN PATENT APPLICATION

(11) **EP 3 299 934 A1**
(43) Date of publication of application: **28.03.2018**
(21) Application number: 17192656.1
(22) Date of filing: 22.09.2017
(51) Int. Cl.: G06F 3/01, G06Q 50/14, G06Q 10/02

(54) **SYSTEMS AND METHODS FOR IMPROVED DATA INTEGRATION IN VIRTUAL REALITY ARCHITECTURES**

(30) Priority: 22.09.2016 US 201615273659
(71) Applicant: Navitaire LLC, Minneapolis, MN 55402 (US)
(72) Inventor: Wilde, Justin Steven, Minneapolis, MN Minnesota 55402 (US)
(74) Representative: Samson & Partner Patentanwälte mbB

(57) **Abstract**

The embodiments described herein provide technologies and techniques for using available data (from a variety of data sources) to provide an integrated and virtual reality experience. Embodiments described herein include systems and methods for obtaining a selection of a travel destination from a virtual reality device, obtaining destination information associated with the travel destination, including travel services for the destination, obtaining contextual information associated with the individual including a device identifier or an individual profile identifier, obtaining profile information associated with the individual and device, and filtering the services based on the profile and destination, providing a virtual environment of the destination including controls, providing the travel services, using the controls and the environment; receiving, the individual's movements in the virtual environment, determining interaction with the virtual environment and updates to the controls and the environment, and providing the updated controls and environment for display to the individual.

## Description

### BACKGROUND

The increasing availability of data and data sources in the modern world has driven increase and innovation in the ways that people consume data. Individuals increasingly rely on online resources and the availability of data to inform their daily behavior and interactions. This plethora of information is being made available in a variety of delivery channels and platforms.

The use of computer technology to imitate the visual world, however, remains in its infancy. Current virtual reality systems can replicate visual data from real visual environments or an imaginary scene. Although useful and entertaining, these types of systems are usually limited to simply providing a display or an environment for a specific application and its limited data set. There is a need for virtual systems that incorporate contextual information and details about the desires of a user to provide a fully integrated, virtual reality experience that utilizes the ever-expanding corpus of available data.

### BRIEF DESCRIPTION OF THE DRAWINGS

Reference will now be made to the accompanying drawings showing example embodiments of this disclosure. In the drawings:
**Fig. 1** is a block diagram of an exemplary system for an integrated virtual reality system, consistent with embodiments of the present disclosure.
**Fig. 2** is a block diagram of an exemplary computing device, consistent with embodiments of the present disclosure.
**Figs. 3A-3C** are diagrams of exemplary virtual reality devices, consistent with embodiments of the present disclosure.
**Figs. 4A-4D** are exemplary uses of virtual reality, consistent with embodiments of the present disclosure.
**Fig. 5** is a flowchart of an exemplary method for improved data integration in virtual reality systems, consistent with embodiments of the present disclosure.
**Fig. 6** is a flowchart of an exemplary method for improved data integration in virtual reality systems, consistent with embodiments of the present disclosure.

### DETAILED DESCRIPTION

Reference will now be made in detail to the exemplary embodiments implemented according to the present disclosure, the examples of which are illustrated in the accompanying drawings. Wherever possible, the same reference numbers will be used throughout the drawings to refer to the same or like parts.

The embodiments described herein relate to improved interaction and integration in virtual reality systems. Virtual reality systems provide vast potential for replicating real environments and presenting imaginary ones. By means of the simulated setting, the user can interact with features of an artificial, computer-generated world.

Current virtual reality systems can use computer generated images and data to replicate a real or imaginary environment surrounding a user. Current implementations, however, of virtual reality systems fail to provide a fully integrated experience. In these systems, the user can interact with the environment, but the virtual world is limited to a predetermined environment. Moreover, typical virtual reality systems are targeted to a particular application with a specific and predetermined data set.

The embodiments described herein approach these problems from a different perspective. Instead of focusing on providing a limited set of information based on a particular application, the disclosed systems integrate data from the virtual reality device itself with a plethora of external and proprietary data sources associated with the individual and the application. The disclosed systems can analyze and process the available data using contextual information about the user. The result of this data integration can be provided to the user's virtual reality device to provide an engaging and immersive environment that is as expansive as the information available to system.

Moreover, the disclosed system and methods can tailor that information based on the contextual information about the individual. The system can link other data sources to context specific data related to the virtual reality environment and the interactions from the user.

For example, using data from the user's digital calendar, the disclosed system and methods can determine a time when the individual is able to take a vacation or needs to travel for work. The disclosed systems and methods can display a virtual reality representation of available flights with specific information personalized to the individual's flight preferences and the source and destination locations. The virtual reality system can transport the user virtually and place the user inside the airports and the cities of travel to give them a virtual tour of the area and an experience of being in the actual places selected. The specific weather and time of day displayed in the virtual environment can be based on the times requested for travel. Moreover, the user can utilize the virtual reality environment to explore the available flights and specific plain orientations in a fully integrated virtual environment. As the user interacts with virtual controls to explore the various options, the environment can change to reflect those interactions, using data received from various data sources. Instead of simply providing information about the flight availability and destinations, the disclosed system's integration of data from multiple data sources provides a tailored virtual reality experience to the individual based on their specific needs or choices.

In this way, the disclosed system and methods can provide interactive experiences to the individual. The majority of virtual reality systems disseminates information and provides a limited ability to interact with a limited environment. Because the disclosed system and methods provide integrated data tailored specifically to the individual and from a variety of data sources, interaction and contextual information from the individual can relate to any number of activities or services associated with the individual. For example, as an individual is traveling on the plane, the individual can select a virtual reality experience allowing them to virtually fly by the Eiffel Tower, watch a full-screen movie, or hang glide over the beach, all based on the movements and contextual information provided by the virtual reality device during the flight. The virtual environment can utilize data about the user to fully provide a uniquely tailored experience.

The embodiments described herein provide technologies and techniques for using vast amounts of available data (from a variety of data sources) to provide an integrated and virtual reality experience. Embodiments described herein include systems and methods for obtaining contextual information about an individual and device information about a virtual reality device associated with the individual from the virtual reality device. The systems and methods further include obtaining a plurality of data regarding, for example, airline bookings. The systems and methods further include obtaining a plurality of data sets associated with the individual or virtual reality device from a plurality of data sources and determining a subset of information from the plurality of data sets relevant to the individual wherein the relevancy of the information is based on the contextual information and the device information obtained from the virtual reality device. Moreover, the embodiments described include systems and methods for generating display data based on the determined subset of information; and providing the display data to the virtual reality device for display on the virtual reality device wherein the user may physically interact with the display data.

In other disclosed embodiments, systems and methods are provided wherein the contextual information obtained from the virtual reality device includes travel information associated with the individual and wherein the travel information includes at least one of a user profile, travel preferences, purchased travel services, travel updates, and historical travel information. The embodiments described herein provide technologies and techniques for using available data (from a variety of data sources) to provide an integrated and virtual reality experience. Embodiments described herein include systems and methods for obtaining a selection of a travel destination from a virtual reality device associated with an individual; obtaining destination information associated with the travel destination from one or more data sources, wherein the destination information includes travel services associated with the travel destination; obtaining contextual information associated with the individual from the one or more data sources, wherein the contextual information includes one of a device identifier associated with the virtual reality device and an individual profile identifier; responsive to the contextual information, obtaining profile information associated with the individual and virtual reality device; filtering the travel services based on the profile information and selection of a travel destination; providing for display to the individual using the virtual reality device, a virtual reality environment representative of the travel destination wherein the virtual reality environment includes one or more virtual reality controls; providing a representation of the filtered travel services, using the one or more virtual reality controls and the virtual reality environment; receiving, from the virtual reality device, the individual's movements in the virtual environment; determining, based on the individual's movements, interaction with the virtual environment; responsive to the interaction, determining updates to the virtual reality controls and the virtual reality environment; and providing the updated virtual reality controls and virtual reality environment to the virtual reality device for display to the individual.

The embodiments described herein further can include systems and methods for generating a virtual reality environment, wherein the virtual reality environment contains one or more three-dimensional virtual controls; providing the virtual reality environment for display, through a virtual reality device; obtaining input through manipulation of the one or more virtual controls, wherein the manipulation is made using the virtual reality device and the manipulation follows at least one movement pattern associated with the one or more virtual controls; determining, based on the input, content of the one or more virtual controls, and the movement pattern associated with the manipulation, changes to the virtual environment wherein the changes are reflective of the manipulation of the one or more virtual controls; and providing the changes to the virtual reality device for display.

The disclosed computer programs comprise instructions that may be stored on a non-transitory computer-readable storage medium. The instructions may be executable by a virtual-reality computing system that includes one or more processors to cause the virtual-reality computing system to perform any of the methods disclosed.

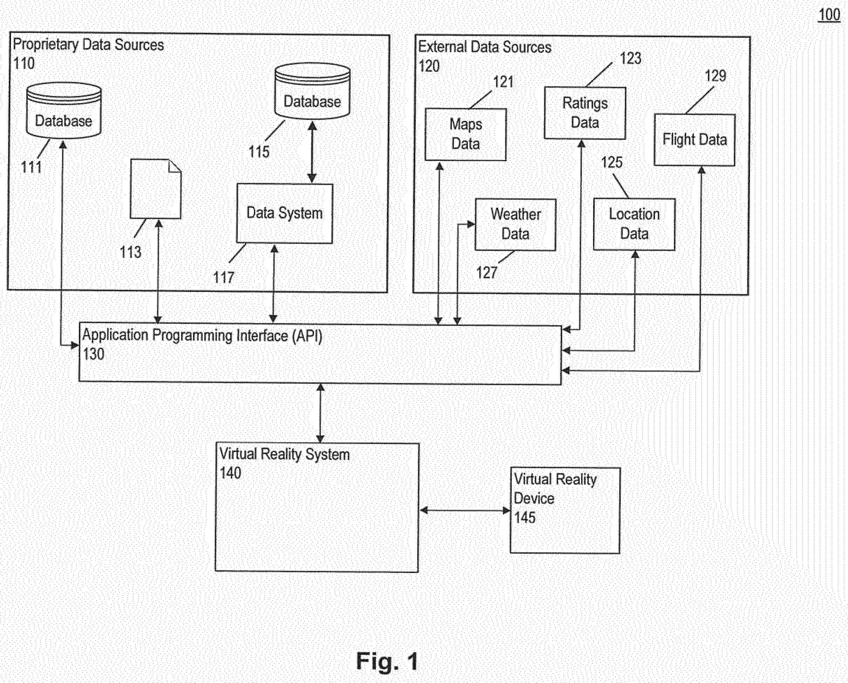

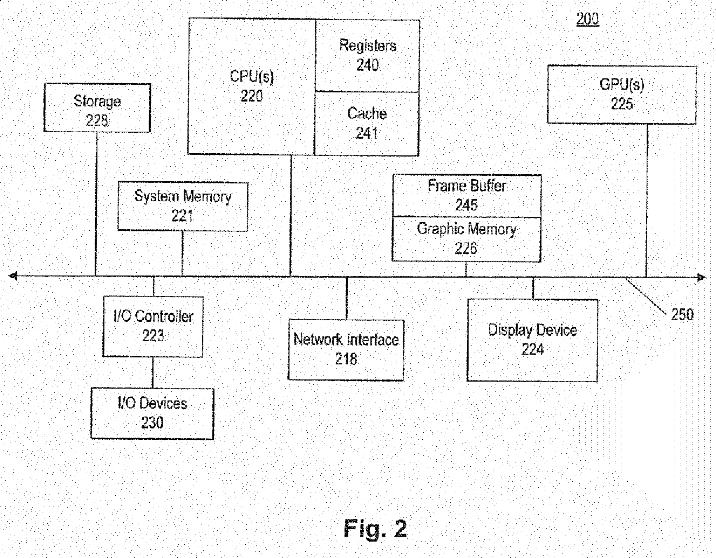

**Fig. 1** is a block diagram of an exemplary system 100 for an integrated virtual reality system, consistent with embodiments of the present disclosure. System 100 can include proprietary data sources 110, including database 111, data source 113, database 115, and data system 117. System 100 can further include external data sources 120 that can include maps data 121, ratings data 123, weather data 127, flight data 129, and location data 125. System 100 can further include one or more application programming interfaces (API) 130. API 130 can be implemented on a server or computer system using, for example, computing device 200, described in more detail below in reference to **Fig. 2****.** Moreover, in some embodiments, API 130 can be implemented as multiple disparate APIs each implemented on, for example, a computing device such as computing device 200. For example, data from proprietary data sources 110 and external data sources 120 can be obtained through I/O devices 230 and/or network interface 218 of computing device 200. Further, the data can be stored during processing in a suitable storage such as storage 228 and/or system memory 221. Referring back to **Fig. 1****,** system 100 can further include virtual reality system 140. Like API 130, virtual reality system 140 can be implemented on a server or computer system using, for example, computing device 200 (described in more detail below).

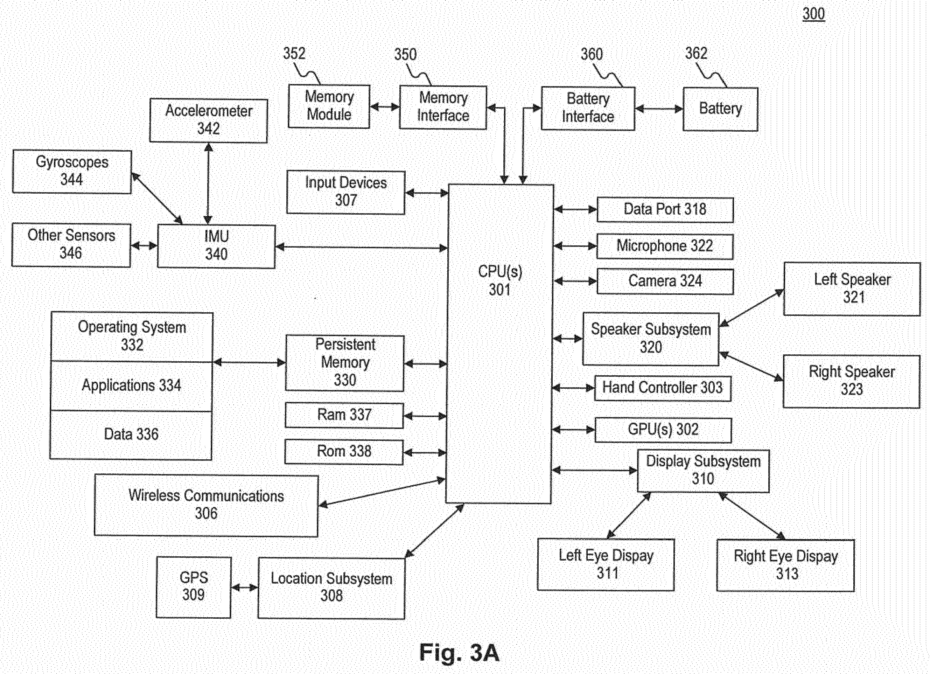

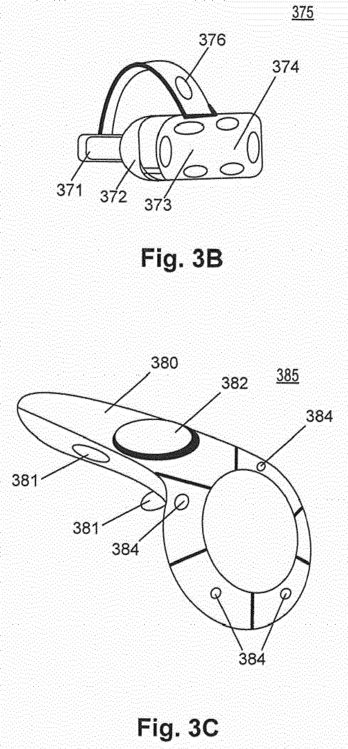

System 100 can further include virtual reality device 145. Virtual reality device 145 can be a device such as virtual reality device 375 and 385 depicted in **Fig. 3B** and **Fig. 3C****,** described in more detail below, or some other virtual reality device. Moreover, virtual reality device 145 can be implemented using the components shown in device 300 shown in **Fig. 3A****,** described in more detail below.

**Fig. 2** is a block diagram of an exemplary computing device 200, consistent with embodiments of the present disclosure. In some embodiments, computing device 200 can be a specialized server providing the functionality described herein. In some embodiments, components of system 100 such as proprietary data sources 110 (e.g., database 111, data source 113, database 115, and data system 117), API 130, virtual reality system 140, and augmented virtual reality device 145) can be can be implemented using computing device 200 or multiple computing devices 200 operating in parallel. Further, computing device 200 can be a second device providing the functionality described herein or receiving information from a server to provide at least some of the described functionality. Moreover, computing device 200 can be an additional device or devices that store and/or provide data consistent with embodiments of the present disclosure.

Computing device 200 can include one or more central processing units (CPUs) 220 and system memory 221. Computing device 200 can also include one or more graphics processing units (GPUs) 225 and graphic memory 226. In some embodiments, computing device 200 can be a headless computing device that does not include GPU(s) 225 and/or graphics memory 226.

CPUs 220 can be single or multiple microprocessors, field-programmable gate arrays, or digital signal processors capable of executing sets of instructions stored in a memory (e.g., system memory 221), a cache (e.g., cache 241), or a register (e.g., one of registers 240). CPUs 220 can contain one or more registers (e.g., registers 240) for storing variable types of data including, inter alia, data, instructions, floating point values, conditional values, memory addresses for locations in memory (e.g., system memory 221 or graphic memory 226), pointers and counters. CPU registers 240 can include special purpose registers used to store data associated with executing instructions such as an instruction pointer, instruction counter, and/or memory stack pointer. System memory 221 can include a tangible and/or non-transitory computer-readable medium, such as a flexible disk, a hard disk, a compact disk read-only memory (CD-ROM), magneto-optical (MO) drive, digital versatile disk random-access memory (DVD-RAM), a solid-state disk (SSD), a flash drive and/or flash memory, processor cache, memory register, or a semiconductor memory. System memory 221 can be one or more memory chips capable of storing data and allowing direct access by CPUs 220. System memory 221 can be any type of random access memory (RAM), or other available memory chip capable of operating as described herein.

CPUs 220 can communicate with system memory 221 via a system interface 250, sometimes referred to as a bus. In embodiments that include GPUs 225, GPUs 225 can be any type of specialized circuitry that can manipulate and alter memory (e.g., graphic memory 226) to provide and/or accelerate the creation of images. GPUs 225 can store images in a frame buffer (e.g., frame buffer 245) for output to a display device such as display device 224. In some embodiments, images stored in frame buffer 245 can be provided to other computing devices through network interface 218 or I/O devices 230. GPUs 225 can have a highly parallel structure optimized for processing large, parallel blocks of graphical data more efficiently than general purpose CPUs 220. Furthermore, the functionality of GPUs 225 can be included in a chipset of a special purpose processing unit or a co-processor.

CPUs 220 can execute programming instructions stored in system memory 221 or other memory, operate on data stored in memory (e.g., system memory 221) and communicate with GPUs 225 through the system interface 250, which bridges communication between the various components of computing device 200. In some embodiments, CPUs 220, GPUs 225, system interface 250, or any combination thereof, are integrated into a single chipset or processing unit. GPUs 225 can execute sets of instructions stored in memory (e.g., system memory 221), to manipulate graphical data stored in system memory 221 or graphic memory 226. For example, CPUs 220 can provide instructions to GPUs 225, and GPUs 225 can process the instructions to render graphics data stored in the graphic memory 226. Graphic memory 226 can be any memory space accessible by GPUs 225, including local memory, system memory, on-chip memories, and hard disk. GPUs 225 can enable displaying of graphical data stored in graphic memory 226 on display device 224 or can process graphical information and provide that information to connected devices through network interface 218 or I/O devices 230.

Computing device 200 can include display device 224 and input/output (I/O) devices 230 (e.g., a keyboard, a mouse, or a pointing device) connected to I/O controller 223. I/O controller 223 can communicate with the other components of computing device 200 via system interface 250. It is appreciated that CPUs 220 can also communicate with system memory 221 and other devices in manners other than through system interface 250, such as through serial communication or direct point-to-point communication. Similarly, GPUs 225 can communicate with graphic memory 226 and other devices in ways other than system interface 250. In addition to receiving input, CPUs 220 can provide output via I/O devices 230 (e.g., through a printer, speakers, or other output devices).

Furthermore, computing device 200 can include a network interface 218 to interface to a LAN, WAN, MAN, or the Internet through a variety of connections including, but not limited to, standard telephone lines, LAN or WAN links (e.g., 802.21, T1, T3, 56 kb, X.25), broadband connections (e.g., ISDN, Frame Relay, ATM), wireless connections (e.g., those conforming to, among others, the 802.11a, 802.11b, 802.11b/g/n, 802.11ac, Bluetooth, Bluetooth LTE, 3GPP, or WiMax standards), or some combination of any or all of the above. Network interface 218 can comprise a built-in network adapter, network interface card, PCMCIA network card, card bus network adapter, wireless network adapter, USB network adapter, modem or any other device suitable for interfacing computing device 200 to any type of network capable of communication and performing the operations described herein.

**Figs. 3A-3C** are diagrams of exemplary virtual reality devices 300, 375, and 385, consistent with embodiments of the present disclosure. These exemplary virtual reality devices can represent the internal components (e.g., as shown in **Fig. 3A**) of a virtual reality device and the external components (e.g., as show in **Fig. 3B-3C**) of a virtual reality device. In some embodiments, **Fig. 3A** can represent an exemplary electronic device 300 contained within virtual reality device 375 and/or hand controller 385 of **Fig. 3B-3C. Fig. 3C** can represent an exemplary hand controller 303 of **Fig. 3A**.

Fig. 3A is a simplified block diagram illustrating an example electronic device 300. In some embodiments, electronic device 300 can include a virtual reality device having video display capabilities and the capability to communicate with other computer systems, for example, via the Internet. Depending on the functionality provided by electronic device 300, in various embodiments, electronic device 300 can be, can include, or can be connected to a handheld device, a multiple-mode communication device configured for both data and voice communication, a smartphone, a mobile telephone, a laptop, a computer wired to the network, a netbook, a gaming console, a tablet, a smart watch, eye glasses, a headset, goggles, or a PDA enabled for networked communication.

Electronic device 300 can include a case (not shown) housing component of electronic device 300. The internal components of electronic device 300 can, for example, be constructed on a printed circuit board (PCB). Although the components and subsystems of electronic device 300 can be realized as discrete elements, the functions of the components and subsystems can also be realized by integrating, combining, or packaging one or more elements together in one or more combinations.

Electronic device 300 can include a controller comprising one or more CPU(s) 301, which controls the overall operation of electronic device 300. CPU(s) 301 can be one or more microprocessors, field programmable gate arrays (FPGAs), digital signal processors (DSPs), or any combination thereof capable of executing particular sets of instructions. CPU(s) 301 can interact with device subsystems such as a wireless communication system 306 for exchanging radio frequency signals with a wireless network to perform communication functions, speaker subsystem 320 for producing audio, location subsystem 308 for acquiring location information, and display subsystem 310 for producing display elements.

CPU(s) 301 can also interact with input devices 307, a persistent memory 330, a random access memory (RAM) 337, a read only memory (ROM) 338, a data port 318 (e.g., a conventional serial data port, a Universal Serial Bus (USB) data port, a 30-pin data port, a Lightning data port, or a High-Definition Multimedia Interface (HDMI) data port), a microphone 322, camera 324, and wireless communications 306 (which can employ any appropriate wireless (e.g., RF), optical, or other short range communications technology (for example, WiFi, Bluetooth or NFC)). Some of the subsystems shown in **Fig. 3** perform communication-related functions, whereas other subsystems can provide "resident" or on-device functions.

Wireless communications 306 includes communication systems for communicating with a network to enable communication with any external devices (e.g., a server, not shown). The particular design of wireless communications 306 depends on the wireless network in which electronic device 300 is intended to operate. Electronic device 300 can send and receive communication signals over the wireless network after the required network registration or activation procedures have been completed.

Location subsystem 308 can provide various systems such as global positioning system (e.g., GPS 309) that provide location information. Additionally, location subsystem can utilize location information from connected devices (e.g., connected through wireless communications 306) to further provide location data. The location information provided by location subsystem 308 can be stored in, for example, persistent memory 330, and used by applications 334 and operating system 332.

Display subsystem 310 can control various displays (e.g., left eye display 311 and right eye display 313). In order to provide a virtual reality display, display subsystem 310 can provide for the display of graphical elements (e.g., those generated using GPU(s) 302). In other embodiments, the display generated on left eye display 311 and right eye display 313 can include an image captured from camera 324 and reproduced with virtual graphical elements. Moreover, display subsystem 310 can display different graphics on left eye display 311 and right eye display 313 to show different elements or to provide a simulation of depth or perspective to create a virtual reality environment. In some embodiments, left eye display 311 and right eye display 313 can be part of a component separate from electronic device 300 connected through, for example, wireless communications 306 or data port 318.

Camera 324 can be a CMOS camera, a CCD camera, or any other type of camera capable of capturing and outputting compressed or uncompressed image data such as still images or video image data. In some embodiments electronic device 300 can include more than one camera. Image data output from camera 324 can be stored in, for example, an image buffer, which can be a temporary buffer residing in RAM 337, or a permanent buffer residing in ROM 338 or persistent memory 330. The image buffer can be, for example, a first-in first-out (FIFO) buffer. In some embodiments the image buffer can be provided directly to GPU(s) 302 and display subsystem 310 for display on left eye display 311 and/or right eye display 313. In some embodiments, the camera information stored in the image buffer can be processed by, for example, CPU(s) 301 or GPU(s) 302 for incorporation into the virtual environment provided through display subsystem 310. In these embodiments, for example, the camera input can be utilized for head tracking or inside-out positional tracking.

Electronic device can include an inertial measurement unit (e.g., IMU 340) for measuring motion and orientation data associated with electronic device 300. IMU 340 can utilize accelerometer 342, gyroscopes 344, and other sensors 346 to capture specific force, angular rate, magnetic fields, and biometric information for use by electronic device 300. The data capture by IMU 340 and the associated sensors (e.g., accelerometer 342, gyroscopes 344, and other sensors 346) can be stored in memory such as persistent memory 330 or RAM 337 and used by applications 334 and operating system 332. The data gathered through IMU 340 and its associated sensors can also be provided to networked devices through, for example, wireless communications 306.

CPU(s) 301 can be one or more processors that operate under stored program control and executes software modules stored in a tangibly-embodied non-transitory computer-readable storage medium such as persistent memory 330, which can be a register, a processor cache, a Random Access Memory (RAM), a flexible disk, a hard disk, a CD-ROM (compact disk-read only memory), and MO (magneto-optical), a DVD-ROM (digital versatile disk-read only memory), a DVD RAM (digital versatile disk-random access memory), or other semiconductor memories.

Software modules can also be stored in a computer-readable storage medium such as ROM 338, or any appropriate persistent memory technology, including EEPROM, EAROM, FLASH. These computer-readable storage mediums store computer-readable instructions for execution by CPU(s) 301 to perform a variety of functions on electronic device 300. Alternatively, functions and methods can also be implemented in hardware components or combinations of hardware and software such as, for example, ASICs and/or special purpose computers.

The software modules can include operating system software 332, used to control operation of electronic device 300. Additionally, the software modules can include software applications 334 for providing additional functionality to electronic device 300. For example, software applications 334 can include applications designed to interface with systems like system 100 above. Applications 334 can provide specific functionality to allow electronic device 300 to interface with different data systems and to provide enhanced functionality.

Software applications 334 can also include a range of applications, including, for example, an e-mail messaging application, an address book, a notepad application, an internet browser application, a voice communication (i.e., telephony or Voice over Internet Protocol (VoIP)) application, a mapping application, a media player application, a health-related application, etc. Each of software applications 334 can include layout information defining the placement of particular fields and graphic elements intended for display on the virtual reality display (e.g., through display subsystem 310) according to that corresponding application. In some embodiments, software applications 334 are software modules executing under the direction of operating system 332. Additionally, in some embodiments, the software applications can include content embedded within web pages designed to be viewed using a virtual reality device.

Operating system 332 can provide a number of application protocol interfaces (APIs) providing an interface for communicating between the various subsystems and services of electronic device 300, and software applications 334. For example, operating system software 332 provides a graphics API to applications that need to create graphical elements for display on electronic device 300. Accessing the user interface API can provide the application with the functionality to create and manage virtual reality interface controls, such as overlays; receive input via camera 324, microphone 322, or input device 307; and other functionality intended for display through display subsystem 310. Furthermore, a camera service API can allow for the capture of video through camera 324 for purposes of capturing image data such as an image or video data that can be processed and used for providing virtual reality through display subsystem 310.

In some embodiments, the components of electronic device 300 can be used together to provide input from the user to electronic device 300. For example, display subsystem 310 can include interactive controls on left eye display 311 and right eye display 313. As part of the virtual reality display, these controls can appear in front of the user of electronic device 300. This input can be processed by electronic device 300. The input can be received from, for example, input devices 307. In some embodiments input devices 307 can be one or more of hand controller 385 shown in **Fig. 3C****.** In these embodiments, data received from hand controller 385 can be processed directly or can be combined with data from the other components of system 300 such as, for example, IMU 340, display subsystem 310, camera 324, and data port 318 to provide input to CPU(s) 301.

In some embodiments, persistent memory 330 stores data 336, including data specific to a user of electronic device 300, such as information of user accounts or device specific identifiers. Persistent memory 330 can also store data relating to those (e.g., contents, notifications, and messages) obtained from services accessed by electronic device 300. Persistent memory 330 can further store data relating to various applications with preferences of the particular user of, for example, electronic device 300. In some embodiments, persistent memory 330 can store data 336 linking a user's data with a particular field of data in an application, such as for automatically providing a user's credentials to an application executing on electronic device 300. Furthermore, in various embodiments, data 336 can also include service data comprising information required by electronic device 300 to establish and maintain communication with a network.

In some embodiments, electronic device 300 can also include one or more removable memory modules 352 (e.g., FLASH memory) and a memory interface 350. Removable memory module 352 can store information used to identify or authenticate a user or the user's account to a wireless network. For example, in conjunction with certain types of wireless networks, including GSM and successor networks, removable memory module 352 is referred to as a Subscriber Identity Module (SIM). Memory module 352 can be inserted in or coupled to memory module interface 350 of electronic device 300 in order to operate in conjunction with the wireless network.

Electronic device 300 can also include a battery 362, which furnishes energy for operating electronic device 300. Battery 362 can be coupled to the electrical circuitry of electronic device 300 through a battery interface 360, which can manage such functions as charging battery 362 from an external power source (not shown) and the distribution of energy to various loads within or coupled to electronic device 300.

A set of applications that control basic device operations, including data and possibly voice communication applications, can be installed on electronic device 300 during or after manufacture. Additional applications or upgrades to operating system software 332 or software applications 334 can also be loaded onto electronic device 300 through data port 318, wireless communications 306, memory module 352, or other suitable system. The downloaded programs or code modules can be permanently installed, for example, written into the persistent memory 330, or written into and executed from RAM 337 for execution by CPU(s) 301 at runtime.

**Fig. 3B** is an exemplary virtual reality device 375. In some embodiments, virtual reality device 375 can be goggles or other headgear that provides a virtual reality representation for the wearer. In other embodiments (not shown in **Fig. 3B**) the virtual reality device can be part of, can be connected to, or can include a computer, mobile device, portable telecommunications device, tablet, PDA, or other computing device as described in relation to **Fig. 3A****.**

As shown in **Fig. 3B****,** virtual reality device 375 can also include processing components 372. Processing components 372 can be enclosures that house the circuitry and modules described above in relation to **Fig. 3A****.** The processing hardware and/or components can be housed in only one side of virtual reality device 375. In yet other embodiments, the processing hardware and/or components can be housed in both sides of virtual reality device 375. The components shown in **Fig. 3A** can be included in any part of virtual reality device 375.

In some embodiments virtual reality device 375 can house only some of then components described in relation to **Fig. 3A****.** For example, virtual reality device 375 can include IMU 340, camera 324, microphone 322, speaker subsystem 320, and display subsystem 310 while the remainder of the components reside in a mobile device, computer, tablet, PDA or some other enclosure connected to virtual reality device 375 (e.g., though, among others, data port 318 and wireless communications 306).

As shown in **Fig**. **3B****,** virtual reality device 375 can also include rear headgear component 371. Rear headgear component 371 can use an adjustable strap to secure the virtual reality device 375 on the wearer. As further depicted in **Fig**. **3B****,** virtual reality device 375 can also include sensors 376. Sensors 376 can allow for communication with hand controller 303 and CPU 301 of the system 300 in **Fig. 3A****.** In some embodiments, virtual reality device 375 can contain one or more sensors 376. Sensors 376 can detect, among other things, movements in the environment, movements of virtual reality device 375 in relation to the environment, and input or movement from hand controller 303. The data from sensors 376 can be provided to CPU(s) 301.

In some embodiments, virtual reality device 375 can include display devices 374 and 373. These display devices can be respectively associated with left eye display 311 and right eye display 313 of **Fig. 3A****.** In these embodiments, display devices 374 and 373 can receive the appropriate display information from left eye display 311, right eye display 313, and display subsystem 310, and display the virtual reality environment. Through this process, virtual reality display device 375 can provide virtual reality graphical elements to be shown in the wearer's field of view. By providing different images to display devices 373 and 374, virtual reality device 375 can create perspective, depth, and other visual illusions to create a virtual reality environment around the user.

Some embodiments of virtual reality device 375 can include speakers (not shown in Fig. 3B). These speakers can be associated with, for example, speaker subsystem 320, left speaker 321, and right speaker 323 from **Fig. 3A****.** Virtual reality device 375 can provide audio through the speakers. By adjusting the sound that is provided to the left and right speakers, virtual reality device 375 can further simulate a virtual reality environment around the user.

**Fig. 3C** is an exemplary view of one hand controller 385 (which can come in a pair), a component of a virtual reality device, consistent with embodiments of the present disclosure. **Fig. 3C** can represent an exemplary hand controller 303 of **Fig. 3A****.** Hand controller 303 can be used to provide input from the user to the electronic device 300. A user can grip, by hand, body 380 of hand controller 385 displayed in **Fig. 3C****.** Moreover, hand controller 385 can include trackpad 382, button 381, and trigger 384 to receive additional user input. Movements and interactions with hand controller 385 can be detected by sensors 384 and translated by the virtual reality system into virtual movements and selections in the virtual environment. For example, raising hand controller 385 can result in sensors 384 transmitting the movement information to virtual reality system 300 of **Fig**. **3A****,** which can translate the movement data into changes to the virtual environment. In this example, these changes can be provided, by virtual reality device 300 to the virtual reality display device 375 through, for example, display subsystem 310. The user's physical movements of hand controller 385 can, accordingly, be represented in the virtual reality environment displayed by virtual reality device 375.

It is appreciated that the physical shape and layout of hand controller 385 is exemplary. In some embodiments, hand controller 385 can take different shapes. For example, hand controller 385 can be a glove, allowing for exact representation of the movements of the user's fingers in the virtual environment. Thus, the user has the ability to move hands and fingers in a three-dimensional space to interact and manipulate the provided virtual environment. In some embodiments, hand controller 385 may not be needed, as virtual reality system 140 can use a line of motion sensing device detecting, for examples, a user's gestures and spoken commands.

Referring back to **Fig. 1****,** each of databases 111 and 115, data source 113, data system 117, API 130, and virtual reality system 140 can be a module, which is a packaged functional hardware unit designed for use with other components or a part of a program that performs a particular function of related functions. Each of these modules can be implemented using computing device 200 of **Fig. 2****.** Each of these components is described in more detail below. In some embodiments, the functionality of system 100 can be split across multiple computing devices (e.g., multiple devices similar to computing device 200) to allow for distributed processing of the data. In these embodiments the different components can communicate over I/O device 230 or network interface 218 of **Fig. 2**'s computing device 200.

Data can be made available to system 100 through proprietary data sources 110 and external data sources 120. It is appreciated that the exemplary data sources shown for each (e.g., databases 111 and 115, data source 113, and data system 117 of proprietary data sources 110 and maps data 121, ratings data 123, weather data 127, flight data 129, and location data 125 of external data sources 120) are not exhaustive. Many different data sources and types of data can exist in both proprietary data sources 110 and external data sources 120. Moreover, some of the data can overlap among external data sources 120 and proprietary data sources 110. For example, external data sources 120 can provide location data 125 which can include data about specific airports or businesses. This same data can also be included, in the same or a different form, in, for example, database 111 of proprietary data sources 110.

Moreover any of the data sources in proprietary data sources 110 and external data sources 120, or any other data sources used by system 100, can be a Relational Database Management System (RDBMS) (e.g., Oracle Database, Microsoft SQL Server, MySQL, PostgreSQL, and/or IBM DB2). An RDBMS can be designed to efficiently return data for an entire row, or record, in as few operations as possible. An RDBMS can store data by serializing each row of data. For example, in an RDBMS, data associated with a record can be stored serially such that data associated with all categories of the record can be accessed in one operation. Moreover, an RDBMS can efficiently allow access of related records stored in disparate tables by joining the records on common fields or attributes.

In some embodiments, any of the data sources in proprietary data sources 110 and external data sources 120, or any other data sources used by system 100, can be a non-relational database management system (NRDBMS) (e.g., XML, Cassandra, CouchDB, MongoDB, Oracle NoSQL Database, FoundationDB, and/or Redis). A non-relational database management system can store data using a variety of data structures such as, among others, a key-value store, a document store, a graph, and a tuple store. For example, a non-relational database using a document store could combine all of the data associated with a particular record into a single document encoded using XML. A non-relational database can provide efficient access of an entire record and provide for effective distribution across multiple data systems.

In some embodiments, any of the data sources in proprietary data sources 110 and external data sources 120, or any other data sources used by system 100, can be a graph database (e.g., Neo4j or Titan). A graph database can store data using graph concepts such as nodes, edges, and properties to represent data. Records stored in a graph database can be associated with other records based on edges that connect the various nodes. These types of databases can efficiently store complex hierarchical relationships that are difficult to model in other types of database systems.

In some embodiments, any of the data sources in proprietary data sources 110 and external data sources 120, or any other data sources used by system 100, can be accessed through an API. For example, data system 117 could be an API that allows access to the data in database 115. Moreover, external data sources 120 can all be publicly available data accessed through an API. API 130 can access the any of the data sources through their specific API to provide additional data and information to system 100.

Although the data sources of proprietary data sources 110 and external data sources 120 are represented in **Fig. 1** as isolated databases or data sources, it is appreciated that these data sources, which can utilize, among others, any of the previously described data storage systems, can be distributed across multiple electronic devices, data storage systems, or other electronic systems.

In addition to providing access directly to data storage systems such as database 111 or data source 113, proprietary data sources 110 can include data system 117. Data system 117 can connect to one or multiple data sources, such as database 115. Data system 117 can provide an interface to the data stored in database 115. In some embodiments, data system can combine the data in database 115 with other data or data system 117 can preprocess the data in database 115 before providing that data to API 130 or some other requestor.

Proprietary data sources 110 can represent various data sources (e.g., database 111, data source 113, database 115, and data system 117) that are not directly accessible or available to the public. These data sources can be provided to subscribers based on the payment of a fee or a subscription. Access to these data sources can be provided directly by the owner of the proprietary data sources or through an interface such as API 130, described in more detail below.

Although only one grouping of proprietary data sources 110 is shown in **Fig. 1**, a variety of proprietary data sources can be available to system 100 from a variety of providers. In some embodiments, each of the groupings of data sources will include data related to a common industry or domain. In other embodiments, the grouping of proprietary data sources can depend on the provider of the various data sources.

For example, the data sources in proprietary data sources 110 can contain data related to the airline travel industry. In this example, database 111 can contain travel profile information. In addition to basic demographic information, the travel profile data can include past travel history, traveler preferences, loyalty information, and other information related to a traveler profile. Further in this example, data source 113 can contain information related to partnerships or ancillary services such as hotels, rental cars, events, insurance, and parking. Additionally, database 115 can contain detailed information about airports, airplanes, specific seat arrangements, gate information, and other logistical information. As previously described, this information can be processed through data system 117. Accordingly, in this exemplary embodiment, the data sources in proprietary data sources 110 can provide comprehensive travel data.

Similar to proprietary data sources 110, external data sources 120 can represent various data sources (e.g., maps data 121, ratings data 123, weather data 127, flight data 129, and location data 125). Unlike proprietary data sources 110, external data sources 120 can be accessible to the public or can be data sources that are outside of the direct control of the provider of API 130 or system 100.

Although only one grouping of external data sources 120 is shown in **Fig. 1****,** a variety of external data sources can be available to system 100 from a variety of providers. In some embodiments, each of the groupings of data sources will include data related to a common industry or domain. In other embodiments, the grouping of external data sources can depend on the provider of the various data sources. In some embodiments, the external data sources 120 can represent every external data source available to API 130.

Moreover, the specific types of data shown in external data sources 120 are merely exemplary. Additional types of data can be included and the inclusion of specific types of data in external data sources 120 is not intended to be limiting.

As shown in **Fig. 1****,** external data sources 120 can include maps data 121. Maps data can include location, maps, and navigation information available through a provided API such as, among others, Google Maps API and/or the Open Street Map API. Ratings Data 123 can include ratings or review information about businesses, products, locations, etc. For example, ratings data 123 can include data from, among others, the Yelp API, Amazon Customer Reviews API, and/or the TripAdvisor Content API. Location data 125 can include specific data such as business profiles, operating hours, menus, or similar. Weather data 127 can be location specific weather information that can be accessed through, among others, the Dark Sky Forecast API, the Weather Channel API, the NOAA Web Services API, and/or the Weather Underground API. Flight data 129 can include flight information, gate information, and/or airport information that can be accessed through, among others, the FlightStats API, FlightWise API, FlightStats API and the FlightAware API. Each of these external data sources 120 (e.g., maps data 1221, ratings data 123, weather data 127, flight data 129, and location data 125) can provide additional data accessed through API 130.

As previously described, API 130 can provide a unified interface for accessing any of the data available through proprietary data sources 110 and external data sources 120 in a common interface. API 130 can be software executing on, for example, a computing device such as computing device 200 described in relation to **Fig. 2**. In these embodiments, API 130 can be written using any standard programming language (e.g., Python, Ruby, Java, C, C++, node.js, PHP, Perl, or similar) and can provide access using a variety of data transfer formats and/or protocols including, among others, SOAP, JSON objects, REST based services, XML, or similar. API 130 can provide receive request for data in a standard format and respond in a predictable format.

In some embodiments, API 130 can combine data from one or more data sources (e.g., data stored in proprietary data sources 110, external data sources 120, or both) into a unified response. Additionally, in some embodiments API 130 can process the information from the various data sources to provide additional fields or attributes not available in the raw data. This processing can be based on one or multiple data sources and can utilize one or multiple records from each data source. For example, API 130 could provide aggregated or statistical information such as averages, sums, numerical ranges, or other calculable information. Moreover, API 130 can normalize data coming from multiple data sources into a common format. The previous description of the capabilities of API 130 is only exemplary. There are many additional ways in which API 130 can retrieve and package the data provided through proprietary data sources 110 and external data sources 120.

Virtual reality system 140 can interact with virtual reality device 145 and API 130. Virtual reality system 140 can receive information related to virtual reality device 145 (e.g., through wireless communications 306 of **Fig**. **3**). This information can include any of the information previously described in relation to **Fig. 3****.** For example, virtual reality system can receive location information, motion information, visual information, sound information, orientation information, biometric information, or any other type of information provided by virtual reality device 145. Additionally, virtual reality system 140 can receive identifying information from virtual reality device 145 such as a device specific identifier or authentication credentials associated with the user of virtual reality device 145.

Virtual reality system 140 can process the information received and formulate requests to API 130. These requests can utilize identifying information from virtual reality device 145, such as a device identifier or authentication credentials from the user of virtual reality device 145.

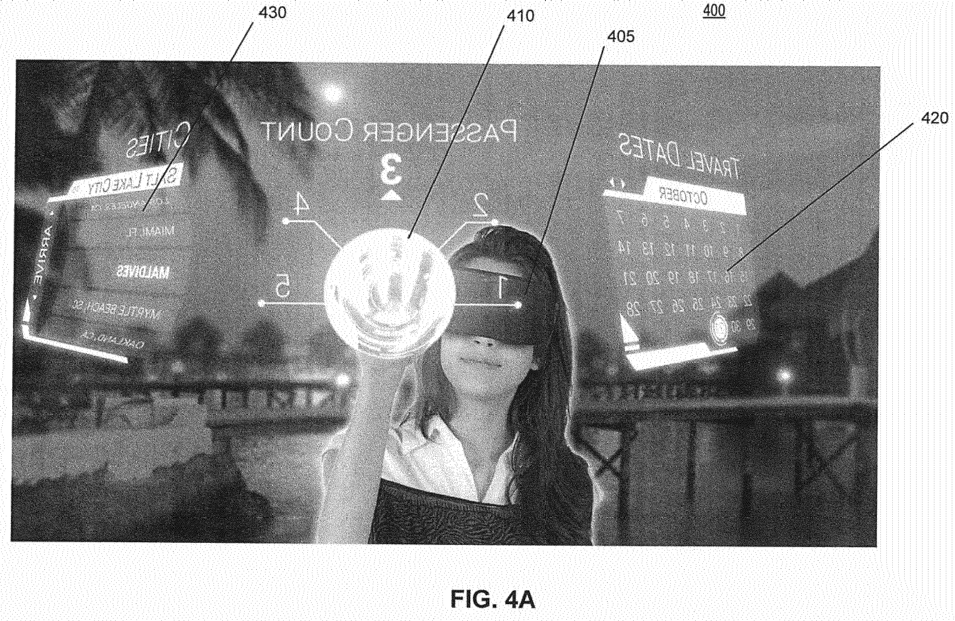

Using the information from virtual reality device 145, virtual reality system 140 can request detailed information through API 130. The information returned from API 130 can be combined with the information received from virtual reality device 145 and processed by virtual reality system 140. Virtual reality system 140 can then make intelligent decisions about updated virtual reality information that should be displayed by virtual reality device 145. Exemplary use cases of this processing are described in more detail below in relation to **Figs. 4A**-**4D****.** Virtual reality device 145 can receive the updated virtual reality information and display the appropriate updates on, for example, displays 373 and 374 shown in **Fig. 3B**.

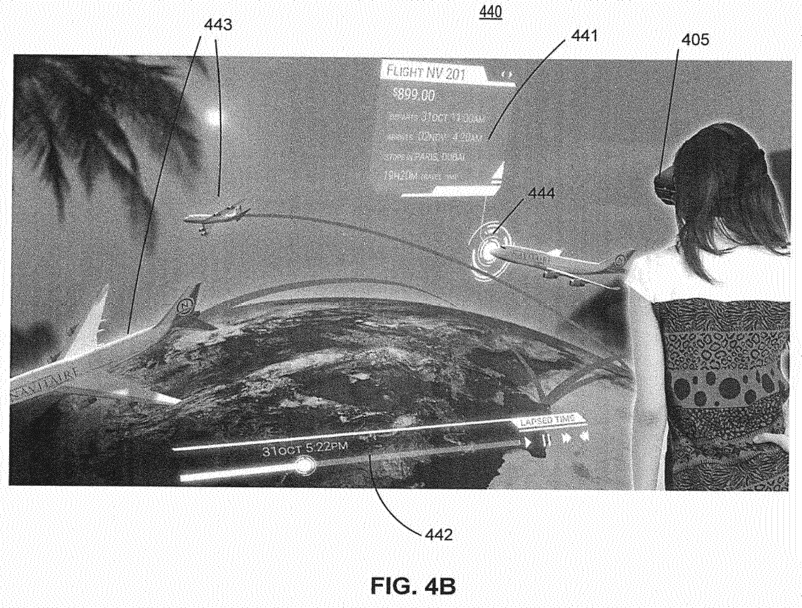

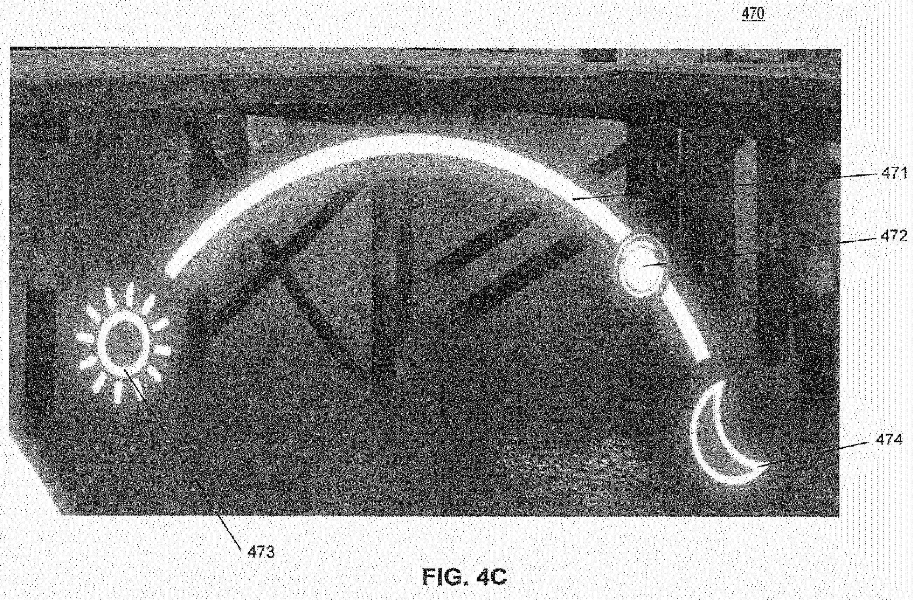

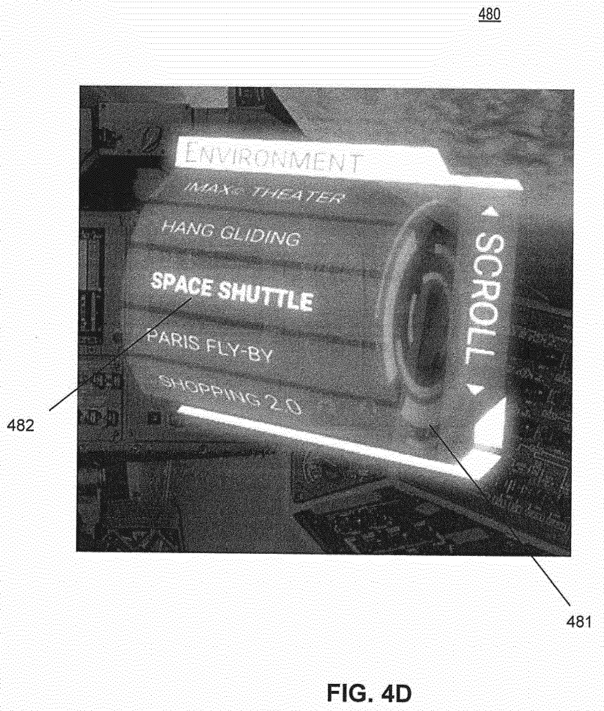

**Figs. 4A-4D** are exemplary uses of system 100 of **Fig. 1****,** consistent with embodiments of the present disclosure. **Fig. 4A** is an exemplary use case for using a virtual reality device (e.g., device 375 from **Fig. 3B** or virtual reality device 145 from **Fig. 1**) for searching, viewing, and selecting flight booking options. **Fig. 4B** is an exemplary use case for using a virtual reality device (e.g., device 375 or virtual reality device 145) for browsing and selecting flight options. **Fig. 4C** is a representation of a virtual reality control that can exist in a virtual reality environment (e.g., using device 375 or virtual reality device 145) for adjusting the time of day or season in a virtual environment. **Fig. 4D** is a representation of a virtual reality control that can exist in a virtual reality environment (e.g., using device 375 or virtual reality device 145) for selecting an environment for an in-flight experience. The examples shown in **Figs. 4A**-**4B** can be representative views of a user using virtual reality system 140 and being inside of the virtual environment. Throughout descriptions of **Figs. 4A**-**4D**, reference will be made to elements previously discussed in **Figs. 1-3** by their appropriate reference numbers.

**Fig. 4A** is an exemplary use case for using a virtual reality device (e.g., device 375 from **Fig. 3B** or virtual reality device 145 from **Fig. 1**) for searching, viewing and selecting flight booking options. Virtual reality representation 400 can be a view through displays 373 and 374 of **Fig**. **3B**. Referring back to **Fig. 4A****,** virtual reality representation 400 can be the display seen by the user through a virtual reality headset 405. Virtual reality headset 405 can be, for example, virtual reality device 375 from **Fig. 3B** or virtual reality device 145 from **Fig. 1****.** Virtual reality representation 400 can include virtual reality controls such as passenger count dial 410, calendar 420, and destination wheel 430.

A user can use, for example, trackpad 382 and button 381 of **Fig. 3C** in combination with their hand movements to select particular cities, travel dates, and flights using the virtual controls (e.g., calendar 420 and destination wheel 430). In some embodiments that use different types of hand controls, such as a glove or a hand controller with no trackpad, the selection can be made using by virtually tapping or manipulating the virtual controls or using other methods provided by the particular hand controller. Moreover, the user can use the controls to virtually grab passenger count dial 410 and rotate it to select the appropriate number of passengers. As demonstrated, the selection consists of manipulation of the three-dimensional, virtual controls.

Because calendar 420, destination wheel 430, and passenger count dial 410 are presented as three dimensional controls in a three dimensional virtual environment, the user can virtually grasp, spin rotate, or manipulate the controls in the same way as would be done in the physical world. Unlike traditional interfaces that require a pointing device or specialized input device such as mouse wheel or pointer, the user of the virtual reality controls and devices shown in **Fig. 4A** can interact through direct manipulation of the controls.

As an example, the user can use a hand controller such as hand controller 385 of **Fig. 3C** to interact with calendar 420, destination wheel 430, and passenger count dial 410. For example, the user can lift controller 385, which can depict the user lifting their hand in the virtual reality environment. The user can press button 381 of hand controller 385 of **Fig. 3C****,** which can depict the user grabbing passenger count dial 410 in the virtual reality environment. The user can move trackpad 382 of **Fig**. **3C****,** which can depict the user rotating their hand to turn the passenger counter 410 dial to select a different number of passengers in the virtual reality environment. In this example, although hand controller 385 does not exactly match the shape of the user's hand, input elements of controller 385 can be used to effectively interact with calendar 420, passenger dial 410, and destination wheel 430, by allowing the user to mimic the appropriate hand movements necessary to interact with the controls in the virtual environment. Different types of interactions using a hand controller can also be utilized for the same purpose. In some embodiments, instead of using the trackpad to rotate a virtual hand, the user can rotate the hand control to cause their virtual hand to rotate the dial or controls. Moreover, in some embodiments, the virtual reality system can utilize hand tracking. In these embodiments, the user can make the movements with their hands that are captured by the virtual reality device and mimicked in the virtual environment allowing the user to grab the control with their hand and rotate the dial as if they were interacting with a physical dial or control.

In some embodiments, the virtual controls can allow the user to book travel. Using these systems, a user can effectively research and view travel services or offers through the virtual reality controls. Through interaction with the virtual environment and controls the user can find and purchase travel or other services.

**Fig. 4B** is an exemplary use case for using virtual reality device 405 (e.g., device 375 from **Fig. 3B** or virtual reality device 145 from **Fig. 1**) for browsing and selecting desired flight options on a world view. Virtual reality environment 440 can be a representation viewed by the user through displays 373 and 374 of **Fig. 3B** that are part of virtual reality device 405. The elements of virtual reality environment 440 can include flights 443, time slider 442, selected flight 444, and selected flight information 441.

As previously described in reference to **Fig. 4A****,** the user can use hand tracking or can use a hand controller, such as hand controller 385 from **Fig. 3C****,** to interact with the virtual environment 440 of **Fig. 4B****,** by moving their hands and arms in the virtual environment. For example, the user can view flights 443 that depart from a particular destination. Each flight of flights 443 can include a three dimensional representation of the particular plane type, the flight path, layover locations, and other information displayed over a three dimensional virtual world. The user can move their hands in the virtual reality environment to rotate the world to change the view or to select specific elements, such as selecting a flight. For example, the user can select selected flight 444.

In response to such a selection, the virtual reality environment 440 can be updated to demonstrate the selection by, for example, showing a selection indicator on selected flight 444. Additionally, virtual reality device 405 can query (e.g., by using API 130 from **Fig. 1**) specific flight details about selected flight 444, which can be displayed as part of the virtual reality environment as flight details 441. In this way, the selection of a particular flight can cause the integration of data not previously available to the virtual reality environment to be retrieved and integrated into the virtual reality environment.

In some embodiments, the user can move time slider 442. The user can use the hand controller or other input system to grasp and move the slider back and forth effectively causing the virtual reality environment to move back and forth in elapsed time. As the user moves the slider, the location and position of the various virtual elements can shift. In such embodiments, the user can view all relevant flights taking off, landing, connections, and layovers changing in the virtual environment as they move time slider 442. Connecting flights can actually touch down on the connecting city on the miniaturized view of the world in the virtual reality environment 440. Accordingly, the user's manipulation of the time slider 442 control directly affects the virtual environment experienced by the user.

In some embodiments, the user can further use virtual environment 440 to explore specific details and information not initially available to virtual environment 440. For example, as shown above, selecting a flight (e.g., selected flight 444) can cause the virtual reality device 405 to retrieve additional flight details from the virtual reality system (e.g., virtual reality system 140 from **Fig. 1**). Additionally, the user can grab selected flight 444 and expand the airplane object for a magnified view or to effectively place the user inside of the aircraft.

As described above, an aircraft object can be used as a control in virtual environment 440 that can convey diverse types of information and interaction. For example, selected flight 444 and flights 443 can be used to convey, among other things, information associated with the flight's route, itinerary, layovers, connections, duration, aircraft type, airline or partner, capacity, seat map, seat properties, and amenities. The selected flight 444 and flights 443 controls can further allow for a variety of interactions including flight selection, fare selection, seat selection, fee schedules, upgrade requests, service requests, and selection of amenities. The use of an airplane can help indicate to the user the types of information and interactions that can be available based on the user's existing associations of the types of information that are related to an airplane object.

As an example of a specific interaction, the layout and seat availability of selected flight 444 can initially be unavailable to the virtual reality environment. But virtual reality environment 440 can, using, for example virtual reality system 140 and API 130 from **Fig. 1****,** retrieve the specific layout and seat availability for selected flight 444 and populate the virtual reality device with the necessary information. In this way, virtual environment 440 is not limited to a closed corpus of data or information. Instead, virtual environment 440 can utilize vast amounts of available information to provide an on-demand, integrated experienced based on the user's manipulation of the elements (e.g., flights 443, time slider 442, selected flight 444, and flight information 441) in virtual environment 440.

**Fig. 4C** is a representation of a time of day control 470 that can exist in a virtual reality environment (e.g., virtual reality representation 400 of **Fig. 4A****,** virtual reality environment 440 of **Fig. 4B** displayed using virtual reality device 375 from **Fig. 3B** or virtual reality device 145 from **Fig. 1**) for changing the time of day. Time of day control 470 can be displayed as a three dimensional graphical control in the virtual reality environment. The elements of time of day control 470 can include time dial 471, time selector 472, sun 473, and moon 474. It is appreciated that the use of graphical symbols such as sun 473 and moon 474 to depict day and night is representative. Any words, text, or symbols that convey similar meaning could be used to demonstrate varying times of day. Additionally, a similar control could be utilized for other time spans. For example, a similar control could be utilized view seasonal changes.

Using, for example, hand controller 385 from **Fig 3C****,** a user can grasp selector 472 and slide it along time selector 472 to select a time of day in the virtual environment. Time of day control 470 can provide updated information to, for example, virtual reality system 140 of **Fig. 1****,** which can retrieve additional information from API 130 of **Fig 1** and update the virtual environment accordingly. Thus, depending on the context in which time of day control 470 appears, the virtual reality environment can change in response to the manipulation of the control.

For example, a user in the middle of San Marco Square in Venice, Italy can use time of day controller 470 to view the square at various times of day. The user can have selected to be in the middle of a winter in Paris or a summer in Cape Town. By manipulating time of day selector 472, the user can directly experience those environments throughout a particular day during those seasons. In some embodiments, a similar time slider can be used to move a user through the different seasons of that particular environment so that a user can experience the difference between summer and winter in Paris or summer and winter in Cape Town. The details of each of these environments can be retrieved by, for example virtual reality system 140 of **Fig. 1****,** as the user interacts with time of day control 470.

Moreover, the virtual reality system 140 can update additional elements of the virtual environment based on the input from time of day control 470 and the context of the virtual environment. After selecting a particular city and date, for example, the virtual environment can display, among other things, the average temperatures, rainfall, UV index, open tourist attractions, and events for a particular time of day as the user changes time of day control 470. The user can use this information to inform decisions about what cities to visit and what experiences might be available.

The virtual reality environment can also be utilized during travel. **Fig. 4D** is a representation of an in-flight experience control 480 that can exist in a virtual reality environment (e.g., as provided through virtual reality device 375 from **Fig. 3B** or virtual reality device 145 from **Fig. 1**) for selecting an environment for an in-flight experience. In-flight experience control 480 can display a scroll wheel 481. Scroll wheel 481 can present options such as a space shuttle environment 482.

As described in relation to **Fig. 4D****,** the user can manipulate, e.g., using hand controller 375 from **Fig. 3B**, in-flight experience control 480. The user can grasp scroll wheel 481 and rotate it before selecting a specific experience such as space shuttle environment 482. Based on the user's interaction with in-flight experience control 480, the virtual environment can utilize contextual information about the user's current real world experience for a customized virtual environment. For example, selecting space shuttle environment 482 can cause virtual reality system to retrieve relevant information from storage (e.g., RAM 337) to allow virtual reality device to turn the virtual environment into a space shuttle cockpit. The user's current flight path can be displayed through the cockpit window of the virtual space shuttle cockpit. As the user rotates their head, the virtual reality device (e.g., virtual reality device 375 from **Fig. 3B** or virtual reality device 145 from **Fig. 1**) can relay the movement information to the virtual reality system, which can update the display.

Moreover, as the airplane itself banks or moves, the virtual reality device can detect the movement information (via one or more sensors such as accelerometer 342) and cause the view through the virtual space shuttle cockpit to similarly change. These environmental movements, which cause the physical environment around the user to move but are not directly caused by the user's movements, can be reflected in the virtual environment. Accordingly, the user can be made to feel like they are not only looking through a virtual space shuttle cockpit, but that the movements of the plane they are experiencing are actually integrated into the experience perceived through the virtual environment.

In some embodiments, a user can use in-flight experience selector 481 to enjoy a movie at full screen during a flight, browse a virtual version of SkyMall, where the user can see and rotate products before purchase, or fly by the Eiffel Tower. Although not based on the actual movements of the flight itself, each of these experiences can utilize integrated data to modify the in-flight experience. For example, the available in-flight experience can be based on the destination of the current flight. Instead of the Eiffel tower, the user may be able to select a flyover of the Roman coliseum if the current flight is heading to Rome or the pyramids if the flight is heading toward Egypt.

In addition to the content of scroll wheel 481 being based on contextual information integrated into the virtual reality experience, the selected experience itself can be based on similar contextual information. A language lesson experience, for example, can be tailored to the language spoken at the flight's destination and tailored to specific travel services the user has already purchased, or products in the virtual SkyMall catalog can be filtered for those products meeting the user's preferences and that are useful at the flight's destination. In each of these scenarios, in-flight experience selector 481 can use contextual information about, the current flight, not previously available to the virtual reality environment, to cause the virtual reality environment to provide a tailored experience to the user.

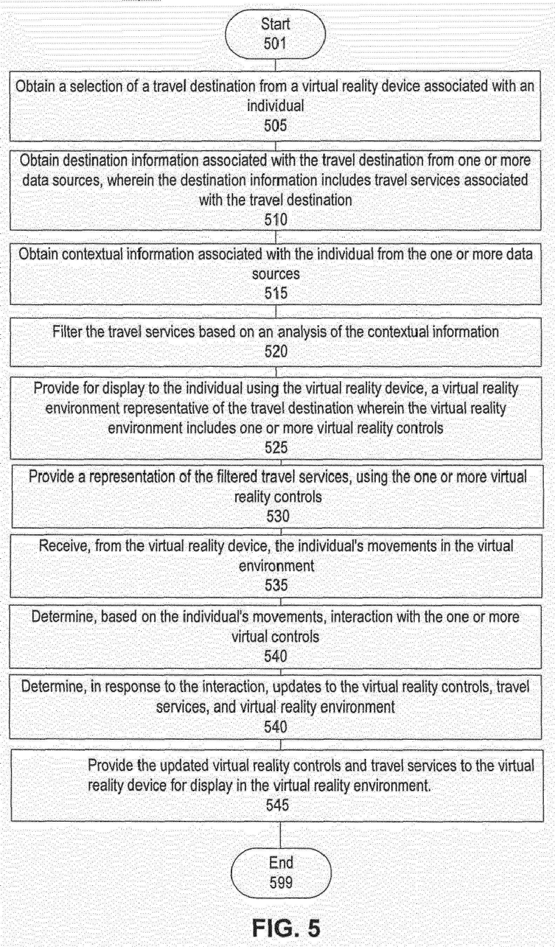

**Fig. 5** is a flowchart of an exemplary method for improved data integration in virtual reality systems, consistent with embodiments of the present disclosure. It will be readily appreciated that the illustrated procedure can be altered to delete steps or further include additional steps. It is appreciated that one or more computing devices (such as the system of **Fig. 2** or the electronic device of **Fig. 3**) can perform the exemplary method and that the functionality described herein can be incorporated as hardware, software stored in the one or more computing devices, or any combination thereof.

After initial step 501, the system (e.g., virtual reality system 140 of **Fig.1**) can obtain (step 505) a selection of a travel destination (e.g., through manipulation of destination wheel) from a virtual reality device. The individual can browse various cities by interacting with the destination wheel using hand tracking or a hand controller (e.g., hand controller 385 from **Fig. 3C**) or other input device to the virtual reality system.

After selecting a destination, the system can obtain (step 510) destination information (e.g., using API 130 of **Fig. 1**) associated with the travel destination. The virtual reality device can query an API of available information on the travel destination. For example, if a user selects Paris as a travel destination, the virtual reality system can use that selection to retrieve maps of Paris (e.g., from maps data 121 through API 130 of **Fig 1**), weather information for Paris (e.g., from weather data 127 through API 130 of **Fig. 1**), and ratings data for the hotels and restaurants in Paris (e.g., from ratings data 123 through API 130 of **Fig. 1**). The retrieved data can further include system specific service offerings (e.g., obtained from proprietary data sources 110 through API 130) which can include, among other things, specific travel excursions, restaurant packages, or hotel specials.

The system can further obtain (step 515) contextual information (e.g., from virtual reality device 145 of **Fig. 1**) associated with the individual. The contextual information can include the individual's stored account information or a device identifier associated with the device and the user. The contextual information can further include information about the user's interactions with the virtual environment.

The system can filter (step 520) the information (e.g., using virtual reality system 140 from **Fig. 1**) based on an analysis of the contextual information obtained from the user or virtual reality device. For example, the contextual information may include a device identifier. Using the device identifier, preference information about the user of that device can be retrieved in a previous step. By analyzing the preference information, the system can determine that the user, for example, only eats at Michelin rated restaurants while traveling or prefers a particular hotel chain for accommodations. In response to these preferences (retrieved based on the contextual information obtained from the virtual reality device), the available travel services can be filtered to exclude anything not strictly matching the preferences criteria.

In some embodiments, the contextual information can directly include selections by the user about the types of experiences they want. For example, the user may indicate in the virtual environment that they want to golf on their trip. Accordingly, the filtering of the available travel services can be tailored to include specific golf packages at the user's selected destination regardless. In this way, information obtained directly from the device as well as information obtained based on information provided by the device can be combined to filter the available travel services.

The system can provide (step 525) a virtual reality environment representative of the travel destination. This environment can include additional virtual controls that the user can manipulate. The virtual reality environment can place the user in the destination city or can show a birds-eye view of the destination city. The user can then manipulate both the virtual environment itself as well as the controls. In some embodiments, the controls can be integrated into the environment such that manipulation of the environment effectively manipulates the controls. For example, a map of the particular destination city can include restaurants and hotels that can be selected and expanded to show seating and menu information retrieved on-demand.

The system can provide (step 530) a representation (e.g., using virtual reality system 140) of the filtered travel services. For example, the virtual environment provided by the system can include a birds-eye view of Paris that includes the hotels associated with the provided travel services highlighted on the map. The user can effectively utilize the map control to investigate the different travel services that are offered by moving the map to expand information about each travel service offered. The system can receive (step 535) interactions from the virtual reality device (e.g., using hand controller 385 or **Fig. 3C**) such as the user's manipulation of the virtual map of Paris. In some embodiments, the virtual control can be a selector or wheel (e.g., scroll wheel 482 from **Fig. 4D**) that can show the available travel services and the system can receive the user's selection of a particular travel service.

The system can determine (step 540) based on the individual's movements or manipulation of the virtual environment (e.g., through virtual reality device 375 and controller 385 of **Figs. 3B-3C**) interaction with the virtual controls. The system can utilize information about the provided controls to interpret the input from the user and detect when the user's motions and selections correlate to the provided controls. In response, the system can determine (step 540) updates (e.g., through virtual reality system 140 of **Fig. 1**) to the virtual controls, travel services, and the virtual environment and provide (step 545) those updates (e.g., through virtual reality device 145 of **Fig. 1**) to the virtual reality environment completing the process (step 599).

Accordingly, in the example of the scroll wheel and the virtual map of Paris showing available travel services, the system can detect the user's movements in the virtual reality environment, and, based on the user's interaction with the virtual environment, retrieve information associated with the user's actions and provide an updated virtual environment and controls that are directly responsive to the user's actions.

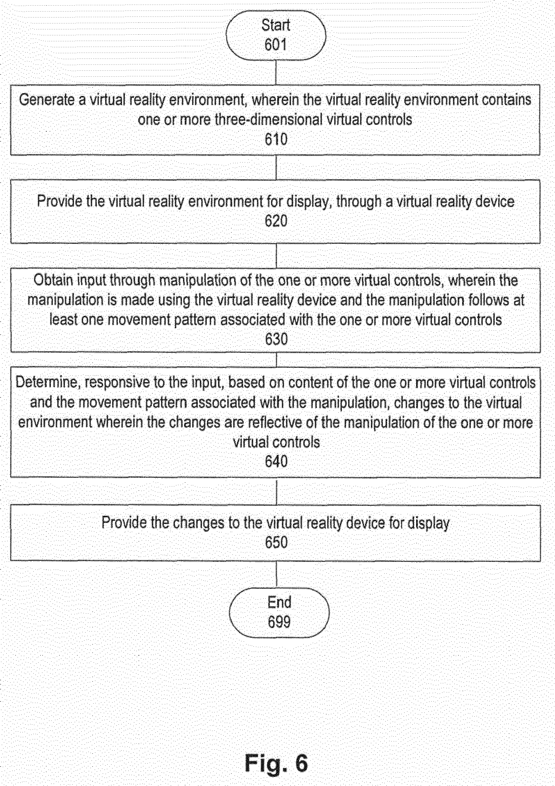

**Fig. 6** is a flowchart of an exemplary method for improved data integration in virtual reality systems, consistent with embodiments of the present disclosure. It will be readily appreciated that the illustrated procedure can be altered to delete steps or further include additional steps. It is appreciated that one or more computing devices (such as the system of **Fig.** 2 or the electronic device of **Fig. 3**) can perform the exemplary method and that the functionality described herein can be incorporated as hardware, software stored in the one or more computing devices, or any combination thereof.

After initial step 601, the system can generate (step 610) a virtual reality environment (e.g., through virtual reality system 140 of **Fig. 1**) that contains one or more three-dimensional virtual controls. The virtual controls can be based on the possible interactions a user can have with the virtual reality environment.

After being generated, the system can provide (step 620) the virtual reality environment for display (e.g., using virtual reality device 145) to the user. The user can interact with the virtual reality environment through physical motion and through controllers (e.g., controller 385 of **Fig. 3**). The system can obtain (step 630) the user's manipulation (e.g., through virtual reality device 145 of **Fig**. **1** or controller 385 of **Fig. 3**), of specific virtual controls. The virtual reality device can detect such manipulation by detecting a user's movement pattern. This movement pattern can be associated with one of the virtual controls. For example, the movement pattern can suggest rotation of a scroll wheel (e.g., scroll wheel 481 of **Fig. 4D**). Each of the virtual controls can have multiple movement patterns associated with manipulation of that particular control.

Based on the input received and the particular movement pattern, the system can determine (step 640) changes to the virtual environment and the controls that are reflective of the user's manipulation. For example, the user's manipulation may suggest movement of a time of day slider (e.g., time of day control 470 of **Fig. 4C**). The predetermined movement pattern can detect the sliding of a time of day selector (e.g., selector 472 across time dial 471 of **Fig. 4C**). Responsive to this movement pattern, the system can determine that the time of day of the virtual environment should change to reflect the input. In addition to detecting movement patterns that reflect types of manipulation of a control (e.g., spinning a scroll wheel such as scroll wheel 481 of **Fig. 4D**), the system can also detect the amount of the manipulation. For example, moving a scroll wheel one slot as opposed to a complete cycle can result in a similar movement pattern with differing levels of rotation. Each of these patterns can be detected as associated with the same control and representing different amounts of rotation.

The system can provide (step 650) the changes to the virtual reality device (e.g., virtual reality device 145 of **Fig. 1**) for display and complete (step 699) the process.

Although the previous systems are described in terms of a travel context, the system can be used for many different domains. The features used and data that is incorporated can be based on the specific the domain in which the disclosed embodiments are deployed.

In the foregoing specification, embodiments have been described with reference to numerous specific details that can vary from implementation to implementation. Certain adaptations and modifications of the described embodiments can be made. Other embodiments, can be apparent to those skilled in the art from consideration of the specification and practice of the invention disclosed herein. It is intended that the specification and examples be considered as exemplary only. It is also intended that the sequence of steps shown in figures are only for illustrative purposes and are not intended to be limited to any particular sequence of steps. As such, those skilled in the art can appreciate that these steps can be performed in a different order while implementing the same method.

## Claims

1. A method for interacting with a virtual reality environment comprising:
obtaining a selection of a travel destination from a virtual reality device associated with an individual;
obtaining destination information associated with the travel destination from one or more data sources, wherein the destination information includes travel services associated with the travel destination;
obtaining contextual information associated with the individual from the one or more data sources, wherein the contextual information includes one of a device identifier associated with the virtual reality device and an individual profile identifier;
responsive to the contextual information, obtaining profile information associated with the individual and virtual reality device;
filtering the travel services based on the profile information and selection of a travel destination;
providing for display to the individual using the virtual reality device, a virtual reality environment representative of the travel destination wherein the virtual reality environment includes one or more virtual reality controls;
providing a representation of the filtered travel services, using the one or more virtual reality controls and the virtual reality environment;
receiving, from the virtual reality device, individual's movements of the individual in the virtual environment;
determining, based on the individual's movements, interaction with the virtual environment;
responsive to the interaction, determining, updates to the virtual reality controls and the virtual reality environment; and
providing the updated virtual reality controls and virtual reality environment to the virtual reality device for display to the individual.

2. The method of claim 1, further comprising:
responsive to the interaction with the one or more virtual reality controls, obtain additional information from the one or more data sources wherein the updates to the virtual reality controls and the virtual reality environment are based on the additional information.

3. The method of claim 1 or 2, wherein the individual's movements are received from a virtual reality controller.

4. The method of any one of claims 1 to 3, wherein the individual's movements are received from an inertial measurement unit of the virtual reality device.

5. The method of any one of claims 1 to 4, wherein environmental movements in a physical environment of the individual are received from an inertial measurement unit of the virtual reality device and the updates to the virtual reality environment are based on the environmental movements.

6. A computer program comprising instructions that are executable by a virtual reality computing system that includes one or more processors to cause the virtual computing system to perform a method according to any one of claims 1 to 5.

7. An electronic device comprising:
a data storage configured to store a travel destination, destination information and contextual information associated with an individual from one or more data sources;
one or more processors configured:
to obtain a selection of a travel destination from a virtual reality device associated with the individual;
to obtain destination information associated with the travel destination from one or more data sources, wherein the destination information includes travel services associated with the travel destination;
to obtain contextual information associated with the individual from the one or more data sources, wherein the contextual information includes one of a device identifier associated with the virtual reality device and an individual profile identifier;
to responsive to the contextual information, obtain profile information associated with the individual and virtual reality device;
to filter the travel services based on the profile information and selection of a travel destination;
to provide for display to the individual using the virtual reality device, a virtual reality environment representative of the travel destination wherein the virtual reality environment includes one or more virtual reality controls;
to provide a representation of the filtered travel services, using the one or more virtual reality controls and the virtual reality environment;
to receive, from the virtual reality device, movements of the individual in the virtual environment;
to determine, based on the individual's movements, interaction with the virtual environment;
to responsive to the interaction, determine updates to the virtual reality controls and the virtual reality environment; and
to provide the updated virtual reality controls and virtual reality environment to the virtual reality device for display to the individual.

8. The electronic device of claim 7, wherein the one or more processors are further configured to carry out the method of any one of claims 2 to 5
responsive to the interaction with the one or more virtual reality controls, to obtain additional information from the one or more data sources wherein the updates to the virtual reality controls and the virtual reality environment are based on the additional information.

9. A method for interacting with a virtual reality computing system comprising:
generating a virtual reality environment, wherein the virtual reality environment contains one or more virtual reality controls;
providing the virtual reality environment for display, through a virtual reality device;
obtaining input through manipulation of the one or more virtual reality controls, wherein the manipulation is made using the virtual reality device and the manipulation follows at least one movement pattern associated with the one or more virtual reality controls;
determining, based on the input, content of the one or more virtual reality controls, and the movement pattern associated with the manipulation, changes to the virtual environment wherein the changes are reflective of the manipulation of the one or more virtual reality controls; and
providing the changes to the virtual reality device for display.

10. The method of claim 9, wherein the manipulation includes using a virtual reality controller for manipulating the one or more virtual reality controls.

11. The method of claim 9 or 10, wherein the one or more virtual reality controls includes a scroll wheel, and/or a time slider, and/or a selection dial, and/or a representation of a three-dimensional object.

12. The method of claim 11, wherein the at least one movement pattern associated with the scroll wheel corresponds to grasping and rotating the scroll wheel.

13. The method of claim 11 or 12, wherein the at least one movement pattern associated with the time slider corresponds to grasping and dragging a portion of the time slider.

14. The method of any one of claims 1 to 13, wherein the at least one movement pattern associated with the selection dial corresponds to grasping and rotating the selection dial.

15. The method of any one of claims 11 to 14, wherein the three-dimensional object is an airplane, or a globe or a map.

16. The method of anyone of claims 9 to 15, wherein the changes to the virtual environment include additional virtual reality controls.

17. The method of anyone of claims 9 to 16, wherein determining changes to the virtual reality environment further includes:
obtaining information from one or more data sources associated with the input wherein the changes to the virtual reality environment are based on the obtained information.

18. A computer program comprising instructions that are executable by a virtual reality computing system that includes one or more processors to cause the virtual computing system to perform a method according to any one of the claims 9 to 17.

19. An electronic device comprising:
a data storage configured to store at least one movement pattern associated with one or more virtual reality controls;
one or more processors configured:
to generate a virtual reality environment, wherein the virtual reality environment contains the one or more virtual reality controls;
to provide the virtual reality environment for display, through a virtual reality device; obtain input through manipulation of the one or more virtual reality controls, wherein the manipulation is made using the virtual reality device and the manipulation follows the at least one movement pattern associated with the one or more virtual reality controls;
to determine, based on the input, content of the one or more virtual reality controls, and the movement pattern associated with the manipulation, changes to the virtual environment wherein the changes are reflective of the manipulation of the one or more virtual reality controls; and
to provide the changes to the virtual reality device for display.

20. The electronic device of claim 19, further including the feature(s) of any one of claims 9 to 17.
